# EUROPÄISCHE PATENTANMELDUNG

(11) **EP 1 724 940 A1**
(43) Veröffentlichungstag der Anmeldung: **22.11.2006**
(21) Anmeldenummer: 05010725.9
(22) Anmeldetag: 18.05.2005
(51) Int. Cl.: H04B 1/707

(54) **Rake-Empfängeranordnung für Mobilfunkgeräte**

(71) Anmelder: SIEMENS AKTIENGESELLSCHAFT, 80333 München (DE)
(72) Erfinder: Braam, Reinhold, 46414 Rhede (DE); Franzen, Michael, 46395 Bocholt (DE); Rösen, Benedikt, Dr., 46459 Rees (DE); Wisniowski, Damian, 46395 Bocholdt (DE)

(57) **Zusammenfassung**

Die Erfindung betrifft eine RAKE-Empfängeranordnung für Mobilfunkgeräte,
wobei ein Abwärts-Wandler (DC) vorgesehen ist, der ein von der Antenne (A) geliefertes Signal in ein analoges, zeitdiskretes Signal (S) umwandelt,
eine Verzögerungsanordnung vorgesehen ist, an deren Eingang das von dem Abwärts-Wandler (DC) erzeugte analoge, zeitdiskrete Signal (S) anliegt und die eine Mehrzahl Ausgänge aufweist, deren jeder ein verschieden zeitlich verzögertes Abbild des zeitdiskreten, analogen Signals (S) bereitstellt,
eine Mehrzahl Verstärker (VI₁, VI₂, ..., VIₙ) vorgesehen ist, denen jeweils eines der verzögerten Abbilder des analogen, zeitdiskreten Signals (S) zugeführt sind und die in ihrem Verstärkungsfaktor (C₀, C₁, ..., Cₙ) einstellbar sind,
ein Pfad-Selektor (PS) zum Steuern der Mehrzahl Verstärker (VI₁, VI₂, ..., VIₙ) vorgesehen ist,
wenigstens ein Kombinier-Kondensator (C_{I}) vorgesehen ist, auf den eine Mehrzahl von Ausgangssignalen der Verstärker (VI₁, VI₂, ..., VIₙ), abhängig von einer Steuerung des Pfad-Selektors (PS), durchschaltbar ist und
eine Wandler-Einrichtung zum Wandeln eines auf einer Ausgangsseite des Kombinier-Kondensators (C_{I}) vorliegenden analogen, zeitdiskreten Signals (S) in digitale Symbole für eine Basisbandsignalverarbeitung vorgesehen ist.

## Beschreibung

Die Erfindung bezieht sich auf eine RAKE-Empfängeranordnung für Mobilfunkgeräte, wie sie im Stand der Technik insbesondere für Anwendungen des Mobilfunkstandards UMTS einsetzbar sind.

Es ist bekannt, solche RAKE-Empfängeranordnungen im Bereich einer Basisbandsignalverarbeitung eines Mobilfunkgerätes zu realisieren. Diese Empfängeranordnungen sind derart ausgelegt, dass sie ein zusammengesetztes Eingangssignal, das von einer Antenne geliefert wird und sich aus Teilsignalen, die unterschiedlichen Ausbreitungspfaden zugeordnet sind, zusammensetzt, derart weiterzuverarbeiten, dass eine konstruktive Überlagerung der auf den verschiedenen Ausbreitungspfaden empfangenen Teilsignale ermöglicht wird. Daraus ergibt sich ein verbessertes Signal-Rauschen-Verhältnis für dasjenige digitale Signal, das einer weiteren Basisbandsignalverarbeitung zuzuführen ist.

Grundlegende Elemente solcher RAKE-Empfängeranordnungen sind eine Verzögerungsanordnung, die verschiedene zeitlich verzögerte Abbilder des Eingangssignals bereitstellt, die jeweils einem unterschiedlichen RAKE-Finger zugeführt werden. Zur Auswahl gerade relevanter RAKE-Finger dient eine Sucheinrichtung, welche ein von der Antenne empfangenes Eingangssignal auf seine zeitliche Struktur untersucht und damit geeignete Verzögerungszeiten für die einzelnen RAKE-Finger ermittelt, so dass ein konstruktive Überlagerung innerhalb eines Kombinierers der RAKE-Empfängeranordnung von statten gehen kann. Sämtliche genannten Komponenten einer bekannten RAKE-Empfängeranordnung sind im digitalen Basisband eines Empfangspfades für ein Mobilfunkgerät realisiert. Dies bedeutet, dass für die Basisbandsignalverarbeitung aufwendige Schaltungen erforderlich sind, um die RAKE-Empfängeranordnung zu realisieren.

Ausgehend hiervon liegt der Erfindung die Aufgabe zugrunde, eine RAKE-Empfängeranordnung anzugeben, bei der die technische Realisierung weniger aufwendig ist.

Diese Aufgabe wird gelöst durch eine RAKE-Empfängeranordnung nach dem Patentanspruch 1.

Danach ist vorgesehen eine PAKE-Empfängeranordnung für Mobilfunkgeräte,
wobei
ein Abwärts-Wandler vorgesehen ist, der ein von der Antenne geliefertes Signal in ein analoges, zeitdiskretes Signal umwandelt,
eine Verzögerungsanordnung vorgesehen ist, an deren Eingang das von dem Abwärts-Wandler erzeugte analoge, zeitdiskrete Signal anliegt und die eine Mehrzahl Ausgänge aufweist, deren jeder ein verschieden zeitlich verzögertes Abbild des zeitdiskreten, analogen Signals bereitstellt,
eine Mehrzahl Verstärker vorgesehen ist, denen jeweils eines der verzögerten Abbilder des analogen, zeitdiskreten Signals zugeführt sind und die in ihrem Verstärkungsfaktor einstellbar sind,
ein Pfad-Selektor zum Steuern der Mehrzahl Verstärker vorgesehen ist,
wenigstens ein Kombinier-Kondensator vorgesehen ist, auf den eine Mehrzahl von Ausgangssignalen der Verstärker, abhängig von einer Steuerung des Pfad-Selektors, durchschaltbar ist und
eine Wandler-Einrichtung zum Wandeln eines auf einer Ausgangsseite des Kombinier-Kondensators vorliegenden analogen, zeitdiskreten Signals in digitale Symbole für eine Basisbandsignalverarbeitung vorgesehen ist.

Mit einer solchen RAKE-Empfängeranordnung ist ein Hauptanteil einer Signalverarbeitung zum Gewinnen der innerhalb des von der Antenne gelieferten Signals enthaltenen Symbol-Information in einen analogen Bereich verlegt. Während beispielsweise bekannte RAKE-Empfänger bereits sehr frühzeitig eine Analog/Digital-wandlung der Eingangssignale vornehmen, wobei bereits die Verzögerungsanordnung mit digitalen Signalen arbeitet, wird nach der Erfindung an dieser Stelle noch von analoger Signalverarbeitung Gebrauch gemacht.

Bevorzugt ist dabei der Abwärts-Wandler, aber auch die Verzögerungsanordnung, die Verstärker und der Kombinier-Kondensator in CMOS-Technologie realisiert. Insofern kann ein digitaler Funkprozessor (DRP) zur Verwirklichung des Abwärts-Wandlers und sämtlicher weiteren, in CMOS-Technologie herstellbaren, Komponenten eingesetzt werden. Diese Technologie gestattet es beispielsweise, dass von der Antenne gelieferte Signal mit einer sehr hohen Frequenz wie beispielsweise mehr als ein GHz abzutasten, so dass das von der Antenne gelieferte Signal mit hoher zeitlicher Auflösung in eine Folge zeitlich aufeinander folgender analoger Signalwerte umgesetzt werden kann. Dabei arbeitet der Abwärts-Wandler typischer Weise innerhalb der RAKE-Empfängeranordnung mit der höchsten Arbeitsfrequenz, so dass die weiteren, ebenfalls in CMOS-Technologie realisierten Komponenten der RAKE-Empfängeranordnung geringere Anforderungen an eine erforderliche Arbeitsfrequenz stellen.

Jeder Verstärker ist bevorzugt als komplexer Verstärker ausgebildet und umfasst vier Unter-Verstärker, die von einem Pseudo-Rauschen-Generator gesteuert sind. Wenn beispielsweise die von der Antenne gelieferten Signale UMTS-Signale sind, wobei ein Spreizcode-unterschiedenes Mehrfachzugriffsverfahren Anwendung findet (W-CDMA), ist es Aufgabe des Pseudo-Rauschen-Generators, beispielsweise sowohl ein Entspreizen der von der Verzögerungsanordnung gelieferten Signale vorzunehmen als auch ein sog. Descrambling auszuführen, wobei ein sog. Scrambling-Code zur Unterscheidung verschiedener Basisstationen eines Mobilfunknetzwerks dient. Im Rahmen des Entspreizens und des Descramblings der an den Verstärkern vorliegenden analogen Signale kann es vorkommen, dass die von dem Pseudo-Rauschen-Generator für diesen Zweck bereitgestellten Sequenzen komplex sind. Daher empfiehlt sich die Ausbildung dieser Verstärker als komplexe Verstärker.

Um auf übliche Weise eine parallele Verarbeitung von In-Phase- und Quadratur-Signalanteilen der von der Antenne empfangenen Signale vorzunehmen, ist es vorteilhaft, dass die Mehrzahl Verstärker in In-Phase-Verstärker und Quadratur-Verstärker aufgeteilt ist und ein zweiter Kombinier-Kondensator vorgesehen ist, so dass der erste Kombinier-Kondensator einem In-Phase-Signalanteil und der zweite Kombinier-Kondensator einem Quadratur-Signalanteil zugeordnet ist.

Für eine Vorfilterung der von den zwei Kombinier-Kondensatoren gelieferten Ausgangssignale wird bevorzugt ein Sigma-Delta-Wandler eingesetzt, dessen Ausgangssignal einem Dezimationsfilter zugeführt ist, das das digitale Ausgangssignal des Sigma-Delta-Wandlers in die digitalen Symbole integriert.

Das eingesetzte Dezimationsfilter, das als kaskadiertes Integrations-Kammfilter ausgeführt sein kann und dessen Ausführung bevorzugt an die Realisierung des Sigma-Delta-Wandlers angepasst ist, führt vorteilhafter Weise ein Reduzieren einer Abtastrate des analogen, zeitdiskreten Signals aus. Beispielsweise arbeitet UMTS mit einer Symbolrate im Basisband von kleiner als einem MHz, so dass der Dezimationsfilter unter Gewährleistung eines günstigen Signal-Rauschen-Verhältnisses die Abtastrate der von den Kornbinier-Kondensatoren kommenden Signale herabsetzt.

Bevorzugt ist der Abwärts-Wandler zum Abtasten des von der Antenne gelieferten Signals in das Analoge, zeitdiskrete Signal mit einer höheren Rate als der Chip-Rate des von der Antenne empfangenen Signals ausgeführt. Dies gewährleistet eine Überabtastung des empfangenen Signals, welche ein Signal-Rauschen-Verhältnis für eine nachfolgende Signalverarbeitung verbessert und für den Sigma-Delta-Wandler und den Dezimationsfilter günstig ist. Dem liegt zugrunde, dass allgemein für eine Analog-Digital-Wandlung die Bandbreite des zu wandelnden Signals erheblich oberhalb der Bandbreite des Ausgangssignals liegen sollte (Nyquist-Theorem).

Ein bevorzugter Wertebereich für die Abtastrate des Abwärts-Wandlers ist an eine Trägerfrequenz des von der Antenne empfangenen Signals angepasst.

Die Erfindung wird nachfolgend anhand der Zeichnungen beispielshalber noch näher beschrieben. Es zeigen:
- Figur 1: eine schematische Übersichtsdarstellung einer RAKE-Empfängeranordnung ohne Analog-/Digital-Wandlung,
- Figur 2A, 2B: jeweils einen komplexen Verstärker für einen In-Phase-Signalanteil und einen Quadratur-signalanteil zum Einsatz bei der RAKE-Empfängeranordnung nach Figur 1 und
- Figur 3: ein Blockschaltbild der RAKE-Empfängeranordnung insgesamt.

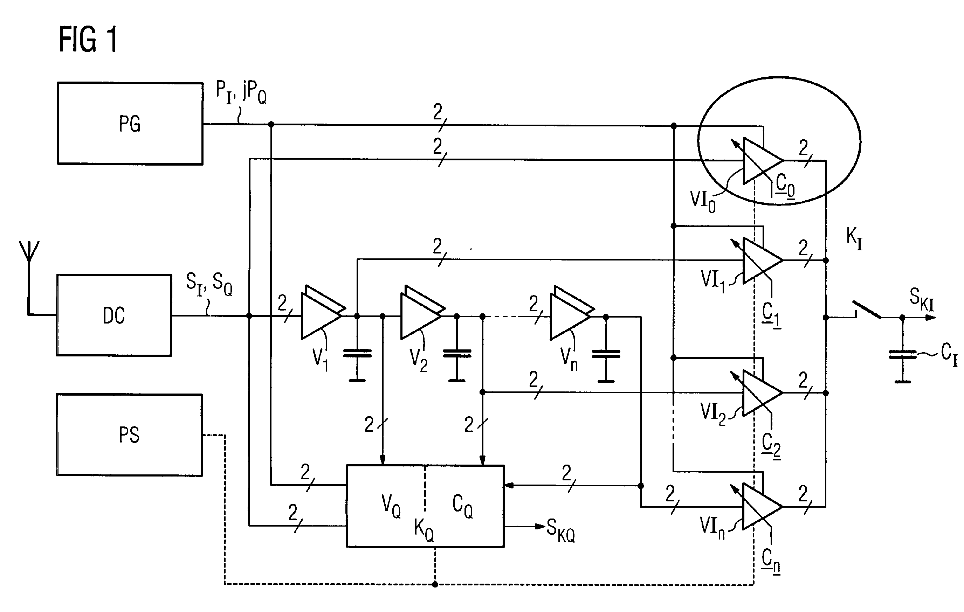

Die Übersichtsdarstellung von Figur 1 zeigt auf einer Eingangsseite der RAKE-Empfängeranordnung eine Antenne A eines Kommunikationsendgerätes, bei dem es sich um beispielsweise eine Basisstation oder ein mobiles Kommunikationsendgerät eines Mobilfunksystems handeln kann. Das Eingangssignal ist in herkömmlicher Weise ein moduliertes Trägersignal, wobei im vorliegenden Fall das Beispiel eines UMTS-Signals betrachtet werden soll, bei dem verschiedene Kommunikationsverbindungen innerhalb einer Mobilfunkzelle mit derselben Trägerfrequenz ausgeführt werden, sich jedoch durch verschieden gespreizte Signale unterscheiden (CDMA-Verfahren). Die vorgestellte RAKE-Empfängeranordnung ist jedoch grundsätzlich für sämtliche Mobilfunkstandards einsetzbar, bei denen ein Mehrwegeempfang zu realisieren ist.

Das von der Antenne A empfangene Signal gelangt unter Zwischenschaltung eines typischer Weise vorgesehenen und in der Figur nicht dargestellten rausch-armen Verstärkers zu einem Abwärts-Wandler DC, der das UMTS-Signal beispielsweise mit einer Frequenz von 2 GHz abtastet und es auf eine Frequenz von 500 MHz dezimiert. Da die UMTS-Chiprate 3,84 Mchip/s beträgt, liefert der Abwärts-Wandler DC ein stark überabgetastetes analoges Signal S auf seiner Ausgangsseite. Dieses Ausgangssignal enthält einen In-Phase-Anteil S_{I} und einen Quadratur-Anteil S_{Q}. Das vollständige Signal S gelangt zu einer Verzögerungsanordnung, die mehrstufig ausgebildet ist und Verzögerungsstufen V₁, V₂, ..., Vₙ vorsieht. Die Verzögerungsanordnung ist als ein analoges, zeitdiskretes Schieberegister ausgeführt, das mit seinen Abgriffen in der Zeit verschobene Abbilder des zeitdiskreten, analogen Signals S von dem Abwärts-Wandler DC bereit stellt.

Sowohl das ursprüngliche analoge, zeitdiskrete Signal S als auch seine verzögerten Abbilder, erzeugt von den Verzögerungsstufen V₁, V₂, ..., Vₙ, werden zwei verschiedenen Verstärkeranordnungen VI, VQ zugeführt, wobei die Verstärkeranordnung VI für einen In-Phase-Signalanteil und die Verstärkeranordnung VQ für einen Quadratur-Signalanteil vorgesehen ist. Aus Gründen der Übersichtlichkeit ist in der Figur 1 nur die Verstärkeranordnung VI im Detail gezeigt, während die Verstärkeranordnung VQ zu einer Kombinieranordnung K_{Q} gehört, die in der Figur 1 als Block dargestellt ist.

Die Verstärkeranordnung VI ist aus parallel zueinander geschalteten Verstärkern VI₀, VI₁, VI₂, ..., VIₙ aufgebaut, wobei jeder der Verstärker VI₁, VI₂, VI₃, ... VIₙ als Eingangssignal ein jeweils anderes verzögertes Abbild, des ursprünglichen analogen, zeitdiskreten Signals S von dem Abwärts-Wandler DC als Eingangssignal erhält. Einander zugehörige Verzögerungsstufen V₁, V₂, ..., Vₙ, und Verstärker VI₁, VI₂, ..., VIₙ bilden jeweils zusammen einen RAKE-Finger in herkömmlichem Sinne.

Jedem der Verstärker VI₀, VI₁, VI₂, ..., vIₙ ist in seinem Verstärkungsfaktor durch einen zugehörigen Faktor C₀, C₁, ..., Cₙ, gesteuert, welcher Kanaleigenschaften des jeweiligen verzögerten Abbildes des ursprünglichen Signals S berücksichtigt.

Zur Auswahl von Ausgangssignalen derjenigen Verstärker von den Verstärkern VI₀, VI₁, VI₂, ..., VIₙ, die tatsächlich einem existierendem Ausbreitungspfad des von der Antenne A empfangenen Signals entsprechen, ist ein Pfad-Selektor PS vorgesehen, bei dem mit Hilfe eines Searchers, der eine Groberfassung derjenigen Verstärkungsstufen vornimmt, denen tatsächliche Ausbreitungspfade zugeordnet sind, Informationen darüber vorliegen, welche Ausgangssignale der Verstärker VI₀, VI₁, VI₂, ..., VIₙ, durchzuschalten sind. Durchgeschaltete Ausgangssignale der Verstärker VI₀, VI₁, VI₂, ..., VIₙ werden zu einem Gesamtsignal zusammengefasst, das einem Kombinier-Kondensator C_{I} für eine spätere Analog-/Digitalwandlung zugeführt wird. Die Verstärker VI₀, VI₁, VI₂, ..., VIₙ bilden gemeinsam mit dem Kombinier-Kondensator C_{I} eine KombinierAnordnung K_{I} für den In-Phase-Signalanteil.

Somit repräsentiert das Ausgangssignal der Kombinieranordnung K_{I} den In-Phase-Signalanteil S_{K}, wobei Nutzsignale, die auf Mehrwegeausbreitung beruhen, zusammen addiert sind. Gleiches gilt für die Kombinieranordnung K_{Q}, die sich auf den Quadratur-Anteil S_{K} bezieht.

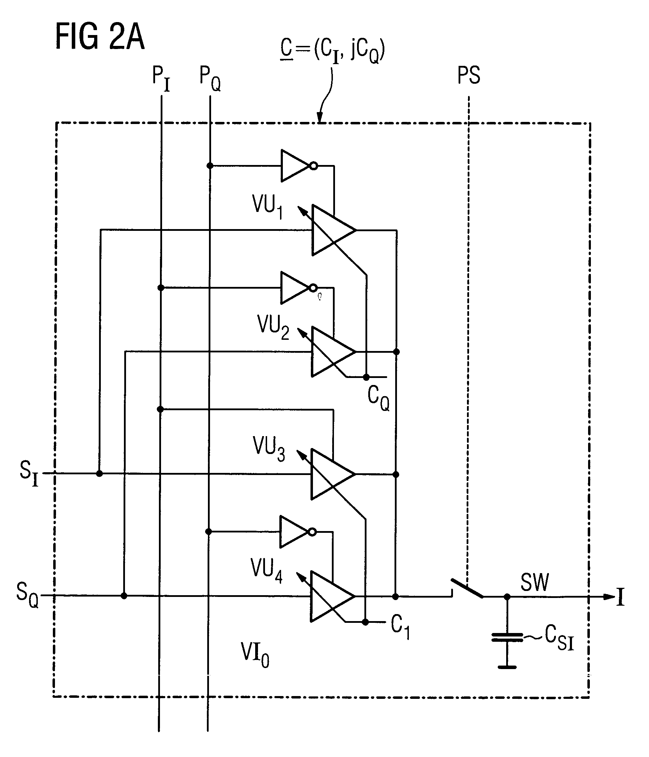

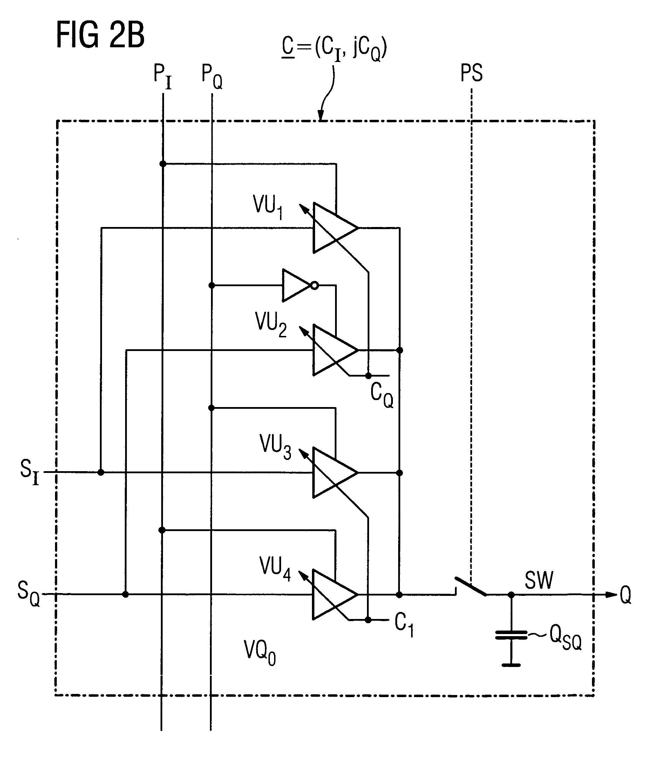

Anhand der Signalverarbeitung für den In-Phase-Anteil S_{I} wird nachstehend erläutert, wie das bei CDMA-Verfahren, wie CDMA2000 oder WCDMA, erforderliche Entspreizen und Descrambling an den verstärkern VI₀, VI₁, VI₂, ..., VIₙ vorgenommen wird. In bekannter Weise, jedoch dort für digitale Signalverarbeitung, erzeugt ein Pseudo-Rauschen-Generator PG eine Sequenz P = P_{I} + iP_{Q}, die zu diesen Zwecken geeignet ist. Die Einflussnahme des Pseudo-Rauschen-Generators PG ist anhand der Figuren 2A, 2B veranschaulicht, wobei die Figur 2A einen der identisch aufgebauten Verstärker VI₀, VI₁, ..., VIₙ für den In-Phase-Signalanteil S_{I} zeigt. Figur 2B veranschaulicht einen entsprechenden Verstärker für den Quadratur-Signalanteil S_{Q} eines Ausbreitungspfades des über die Antenne A empfangenen Ausgangssignals. Der Einfachheit halber werden der In-Phase-Signalanteil S_{I} und der Quadratur-Signalanteil S_{Q} mit denselben Bezugszeichen bezeichnet wie die jeweiligen Anteile des Ausgangssignals S, denn sie unterscheiden sich lediglich durch verschiedene zeitliche Verzögerungen aufgrund der Verzögerungsanordnung. Für beide Verstärker gilt, dass der Pseudo-Rauschen-Generator PG eine In-Phase-Sequenz P_{I} und eine Quadratur-Sequenz P_{Q} bereitstellt. Der Verstärker VI₀ von Figur 2A umfasst insgesamt vier Unterverstärker VU₁, ..., VU₄, deren Ausgänge zusammengeschaltet sind. Die beiden Unterstärker VU₁, VU₂ sind hinsichtlich ihres Verstärkungsfaktors durch den Quadratur-Kanalkoeffizienten C_{Q} gesteuert, während die Unterverstärker UV₃, UV₄ bezüglich ihres Verstärkungsfaktors von dem In-Phase-Kanalkoeffizienten C_{I} beaufschlagt sind. An den Unterverstärkern VU₂ und VU₄ liegt als Eingangssignal der dem entsprechenden Ausbreitungspfad zugehörige Quadratur-Signalanteil S_{I} vor, während die Unterverstärker UV₁, UV₃ als Eingangssignal den In-Phase-Signalanteil S_{Q} desselben Ausbreitungspfades erhalten.

Hinsichtlich des Kanalkoeffizienten C, der komplexwertig ist, gilt in diesem Zusammenhang C = C_{I} + iC_{Q}.

Die Unterverstärker UV₁, UV₂ und UV₄ sind von der Quadratursequenz P_{Q} gesteuert, wobei jeweils ein Inverter vorgeschaltet ist, während der Unterverstärker UV₃ von der In-Phase-Sequenz P_{I} gesteuert sind. Die Wirkung der soeben erläuterten Schaltungsanordnung des Verstärkers VI₀ ist diejenige, dass an seinem Ausgang mit Hilfe eines Summations-Kondensators C_{SI} ein analoges, zeitdiskretes und den In-Phase-Signalanteil S_{I} des betreffenden Ausbreitungspfades wiedergebendes Signal vorliegt, das entspreizt ist und ein Descrambling erfahren hat.

Der in Figur 2B veranschaulichte Verstärker VQ₀ entspricht schaltungstechnisch dem anhand der Figur 2A erläuterten Verstärker VI₀, so dass in der Figur 2B funktionsähnliche Bauelemente mit denselben Bezugszeichen bezeichnet sind, wie in Figur 2A. Einziger Unterschied ist es, dass der Unterverstärker VU₂ als einziger der Unterverstärker die Quadratur-Sequenz P_{Q} von dem Pseudo-Rauschen-Generator PG über einen Inverter erhält. Die Schaltung des Verstärkers VQ₀ ist derart ausgelegt, dass an einem Summations-Kondensator C_{Q} ein Quadratur-Signal erzeugt wird, das einem zugehörigen Ausbreitungspfad entspricht. Figur 1 ist dahingehend vereinfacht, dass die Leitungen für P und S nur als eine Linie dargestellt sind, aber tatsächlich aus einem Leitungspaar bestehen, nämlich einer Leitung für I und einer Leitung für Q.

Außerdem weisen beide Verstärker VI₀, VQ₀ jeweils einen Schalter SW auf, der von dem bereits oben in seiner Funktionsweise erläuterten Pfad-Selektor PS gesteuert wird, d. h. geschlossen wird, wenn das betreffende verzögerte Abbild des Ausgangssignals S einem tatsächlichen Ausbreitungspfad des Mehrwegesignals zugeordnet ist.

Die Kombinier-Anordnungen K_{Q} und K_{I} arbeiten bei der Verarbeitung eines UMTS-Signals beispielsweise mit einer Taktfrequenz von 500 MHz (Abtastung mit 2 GHz), was etwa einem Viertel der Abtastfrequenz entspricht, mit der Abwärts-Wandler DC betrieben wird.

Nach dem nun kombinierte Quadratur- und In-Phase-Signalanteile aufgrund des Mehrwegeempfangs generiert worden sind, wobei nach wie vor zeitdiskrete analoge Signale vorliegen, steht nun noch deren Analog-/Digitalwandlung und Umsetzung in In-Phase-Symbole und Quadratur-Symbole an.

Die Ausgangsignale SK_{I}, SK_{Q} der beiden Kombinier-Anordnungen K_{I}, K_{Q} werden einem Sigma-Delta-Wandler SD zugeführt, wobei nach wie vor ein stark überabgetastetes Signal vorliegt. Ausgangssignale des Sigma-Delta-Wandlers in Form eines Bitstroms gelangen zu einem als kaskadiertes Integrator-Kammfilter ausgeführtes Dezimationsfilter D, das gleichzeitig zur Integration der Signalchips zu In-Phase-Symbolen und Quadratur-Symbolen und zur Anpassung der Abtastrate an die für UMTS geeignete Rate für eine weitere Basisbandsignalverarbeitung dient.

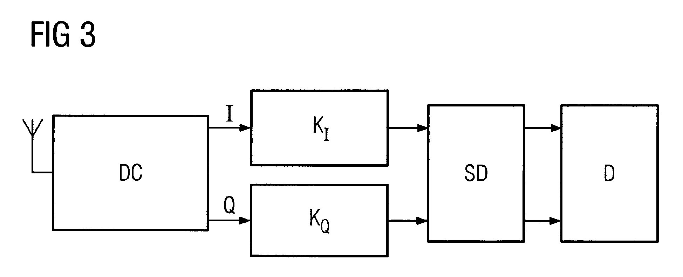

Es ist hervorzuheben, dass sämtliche, in Figur 3 dargestellten Komponenten auf einem einzigen digitalen Funkprozessor (DRP) realisiert sein können.

## Patentansprüche

1. RAKE-Empfängeranordnung für Mobilfunkgeräte,
**dadurch gekennzeichnet,**
**dass** ein Abwärts-Wandler (DC) vorgesehen ist, der ein von der Antenne (A) geliefertes Signal (S) in ein analoges, zeitdiskretes Signal umwandelt,
eine Verzögerungsanordnung vorgesehen ist, an deren Eingang das von dem Abwärts-Wandler (DC) erzeugte analoge, zeitdiskrete Signal (S) anliegt und die eine Mehrzahl Ausgänge aufweist, deren jeder ein verschieden zeitlich verzögertes Abbild des zeitdiskreten, analogen Signals (S) bereitstellt,
eine Mehrzahl Verstärker (VI₁, VI₂, ..., VIₙ) vorgesehen ist, denen jeweils eines der verzögerten Abbilder des analogen, zeitdiskreten Signals (S) zugeführt sind und die in ihrem Verstärkungsfaktor (C₀, C₁, ..., Cₙ) einstellbar sind,
ein Pfad-Selektor (PS) zum Steuern der Mehrzahl Verstärker (VI₁, VI₂, ..., VIₙ) vorgesehen ist,
wenigstens ein Kombinier-Kondensator (C_{I}) vorgesehen ist, auf den eine Mehrzahl von Ausgangssignalen der Verstärker (VI₁, VI₂, ..., VIₙ), abhängig von einer Steuerung des Pfad-Selektors (PS), durchschaltbar ist und
eine Wandler-Einrichtung zum Wandeln eines auf einer Ausgangsseite des Kombinier-Kondensators (C_{I}) vorliegenden analogen, zeitdiskreten Signals (S) in digitale Symbole für eine Basisbandsignalverarbeitung vorgesehen ist.

2. RAKE-Empfängeranordnung nach Anspruch 1,
**dadurch gekennzeichnet,**
**dass** der Abwärts-Wandler (DC) in CMOS-Technologie realisiert ist.

3. RAKE-Empfängeranordnung nach einem der Ansprüche 1 bis 2,
**dadurch gekennzeichnet,**
**dass** jeder Verstärker (VI₁, V1₂, ..., VIₙ) als komplexer Verstärker ausgebildet ist und vier Unter-Verstärker umfasst, die von einem Pseudo-Rauschen-Generator gesteuert sind.

4. RAKE-Empfängeranordnung nach einem der Ansprüche 1 bis 3,
**dadurch gekennzeichnet,**
**dass** die Mehrzahl Verstärker (VI₁, VI₂, ..., VIₙ) in In-Phase-Verstärker und Quadratur-Verstärker aufgeteilt sind und ein zweiter Kombinier-Kondensator (C_{I}) vorgesehen ist, so dass der erste Kombinier-Kondensator (C_{I}) einem In-Phase-Signalanteil (S_{I}) und der zweite Kombinier-Kondensator (C_{I}) einem Quadratur-Signalanteil (S_{Q}) zugeordnet ist.

5. RAKE-Empfängeranordnung nach einem der Ansprüche 1 bis 4,
**dadurch gekennzeichnet,**
**dass** die Wandler-Einrichtung einen Sigma-Delta-Wandler aufweist, dessen Ausgangssignal einem Dezimationsfilter zugeführt ist, das das Ausgangssignal des Sigma-Delta-Wandlers in die digitalen Symbole integriert.

6. RAKE-Empfängeranordnung nach Anspruch 5,
**dadurch gekennzeichnet,**
**dass** das Dezimationsfilter zum Reduzieren einer Abtastrate des analogen, zeitdiskreten Signals (S) ausgeführt ist.

7. RAKE-Empfängeranordnung nach einem der Ansprüche 1 bis 6,
**dadurch gekennzeichnet,**
**dass** der Abwärts-Wandler (DC) zum Abtasten des von der Antenne (A) gelieferten Signals (S) in das analoge, zeitdiskrete Signal (S) mit einer höheren Rate als einer Chip-Rate des von der Antenne (A) empfangenen Signals (S) ausgeführt ist.

8. RAKE-Empfängeranordnung nach Anspruch 7,
**dadurch gekennzeichnet,**
**dass** die am Ausgang des Abwärts-Wandlers (DC) anliegende Abtastrate einem ganzzahligen Teiler einer Trägerfrequenz des von der Antenne (A) gelieferten Signals entspricht.
